## Europäisches Patentamt
## European Patent Office
## Office européen des brevets

(19)

(11) Numéro de publication: **0 193 472**
**B1**

(12) # FASCICULE DE BREVET EUROPEEN

(45) Date de publication du fascicule du brevet:
03.05.89

(51) Int. Cl.⁴: **A43B 5/14**

(21) Numéro de dépôt: **86400424.7**

(22) Date de dépôt: **27.02.86**

---

(54) **Chaussure de cyclisme.**

---

(30) Priorité: **28.02.85 FR 8502982**

(43) Date de publication de la demande:
**03.09.86 Bulletin 86/36**

(45) Mention de la délivrance du brevet:
**03.05.89 Bulletin 89/18**

(84) Etats contractants désignés:
**DE GB IT**

(56) Documents cités:
**EP-A- 0 015 803**
**FR-A- 2 464 660**
**FR-A- 2 464 661**

(73) Titulaire: **PATRICK S.A. Société dite,
F-85700 Pouzauges(FR)**

(72) Inventeur: **Barre, Jean-Gabriel, 1, rue du Droguet,
F-85700 Pouzauges(FR)**

(74) Mandataire: **Caunet, Jean et al, Cabinet BEAU DE
LOMENIE 55, rue d'Amsterdam, F-75008 Paris(FR)**

ACTORUM AG

**Description**

La présente invention concerne une chaussure de cyclisme sous le semelage de laquelle peut être monté un dispositif cale-pédale ou un dispositif fixe-pédale de sécurité.

Les dispositifs cale-pédales connus (voir FR-A 2 464 660) comportent généralement une pièce à fixer en correspondance avec un gabarit de montage sous le semelage de la chaussure. La pièce considérée présente une rainure transversale qui s'emboîte sur l'une des barrettes méplates de la pédale lorsque le bout de pied de la chaussure bute contre un cale-pied rapporté sur ladite pédale, cette liaison rainure-barrette étant maintenue pendant le pédalage par une courroie serre-pied.

Ladite pièce à rainure fixée au moyen de vis par l'utilisateur doit cependant disposer de moyens de règlage en position longitudinale et en position angulaire.

Les moyens proposés jusqu'à présent présentent l'inconvénient d'être difficiles à conjuguer entre eux – ce qui rend pratiquement impossible l'obtention aisée et rapide d'un règlage fin – et d'être d'une fabrication compliquée, onéreuse, relativement fragile et peu fiable.

La présente invention a pour but de remédier à cet inconvénient, en proposant un semelage perfectionné dans lequel est noyé un élément de fixation monté pivotant autour d'un axe central et présentant trois trous taraudés pour des vis traversant trois lumières longitudinales d'une plaquette cale-pédale à rainure et trois lumières concentriques à cet axe, ménagées dans la couche d'usure contre laquelle sont appliqués cet élément de fixation et cette plaquette cale-pédale.

Suivant une forme de réalisation particulièrement avantageuse, le semelage délimite un logement dans lequel est disposée une couronne montée tournante autour d'un bossage central et intercalée avec jeu entre le fond de ce logement et une première de montage collée sur le dessus du semelage, cette couronne présentant trois pattes saillantes qui s'étendent dans des échancrures du logement pour limiter l'amplitude angulaire du pivotement de la couronne et qui délimitent les trois trous taraudés précités.

De préférence, deux trous taraudés et leurs lumières sont disposés en ligne transversale à l'avant, tandis que le troisième trou taraudé et sa lumière sont situés à l'arrière des précédents.

Ce dispositif de l'invention permet donc de régler très facilement, rapidement et précisément le positionnement du cale-pédale par l'utilisateur en fonction de la morphologie de ses pieds et de sa pratique personnelle du cyclisme. Il présente en outre l'avantage que sa fabrication et son montage sont faciles et peu onéreux à mettre en œuvre, que son installation est très solide et fiable.

La présente invention poursuivant ce but, vise concomitamment à ce qu'il soit possible de monter indifféremment le dispositif cale-pédale précité ou un dispositif fixe-pédale de sécurité.

Ce dispositif fixe-pédale de sécurité commercialisé par la firme LOOK comprend une pièce d'ancrage susceptible d'être fixée sous le semelage au moyen de trois vis traversant trois lumières longitudinales de cette pièce dont deux sont disposées en ligne transversale à l'arrière, tandis que la troisième est située à l'avant des précédentes, ladite pièce d'ancrage coopérant avec une pièce à fixation rapide de sécurité destinée à être montée sur une manivelle du pédalier. La pièce à fixation rapide comporte un mors antérieur fixe et un mors postérieur pivotant autour d'un axe sensiblement horizontal, ces mors étant normalement en prise avec des becs de la pièce d'ancrage; les becs et les mors sont arqués pour permettre un démontage rapide de sécurité par échappement latéral lors d'un pivotement forcé, autour d'un axe sensiblement vertical, contre l'action d'un ressort règlable maintenant le mors postérieur verrouillé élastiquement. De plus, la pièce à fixation rapide de sécurité est montée tournante autour d'un axe transversal destiné à être vissé dans l'extrémité libre de la manivelle correspondante du pédalier.

Jusqu'à présent, les vis de fixation de la pièce d'ancrage doivent être posées pour l'utilisateur qui se sert d'un gabarit de positionnement pour percer les trous d'ébauche dans le semelage. Ce montage par l'utilisateur n'est jamais parfait, malgré le rattrapage possible par les lumières de règlage, car il s'agit d'une opération délicate à exécuter sans guide par un bricoleur, d'autant plus qu'en raison de la pliure du semelage au droit des métatarsiens, le trou antérieur doit légèrement converger vers les trous postérieurs.

Pour atteindre le but visé, en remédiant à cet inconvénient, à savoir rendre possible de monter indifféremment sous le semelage le dispositif cale-pédale précité ou ce dispositif fixe-pédale de sécurité, la présente invention prévoit en outre que les deux trous taraudés antérieurs du dispositif cale-pédale sont disposés sur la ligne transversale des lumières postérieures du dispositif fixe-pédale et au même écartement que celles-ci afin de permettre la fixation avec règlage angulaire de la pièce d'ancrage, le semelage comportant également un insert taraudé situé à l'avant en correspondance avec la lumière antérieure de ladite pièce d'ancrage.

Ainsi, il devient très facile de monter rapidement et facilement la pièce d'ancrage du dispositif fixe-pédale de sécurité. En outre, le règlage du positionnement est amélioré par le fait que ladite pièce peut être déplacée, non seulement en translation longitudinale, mais également en angulation par pivotement de l'élément de fixation en forme de couronne.

Divers autres caractéristiques et avantages de l'invention ressortent d'ailleurs de la description détaillée qui suit.

Une forme de réalisation de l'objet de l'invention est représentée, à titre d'exemple non limitatif, sur le dessin annexé.

Sur ce dessin:

– la figure 1 est un plan vu de dessous de l'avant du semelage d'une chaussure de cyclisme montrant le dispositif cale-pédale conforme à l'invention,

– la figure 2 est une coupe longitudinale partielle prise suivant la ligne II–II de la figure 1, le semelage étant fixé sous la première de montage et par son intermédiaire avec la tige,

– la figure 3 est un plan vu de dessus de cet avant du semelage montrant la partie cachée du dispositif cale-pédale,

– la figure 4 est une vue analogue à la figure 1 illustrant la pièce d'ancrage du dispositif fixe-pédale de sécurité, montée sous l'avant du semelage,

– la figure 5 est une élévation partielle prise suivant la ligne V–V de la figure 4, illustrant le dispositif dans son ensemble, c'est-à-dire avec la pièce d'ancrage bridée dans la pièce à fixation rapide, qui est montée tournante à demeure sur la manivelle correspondante du pédalier.

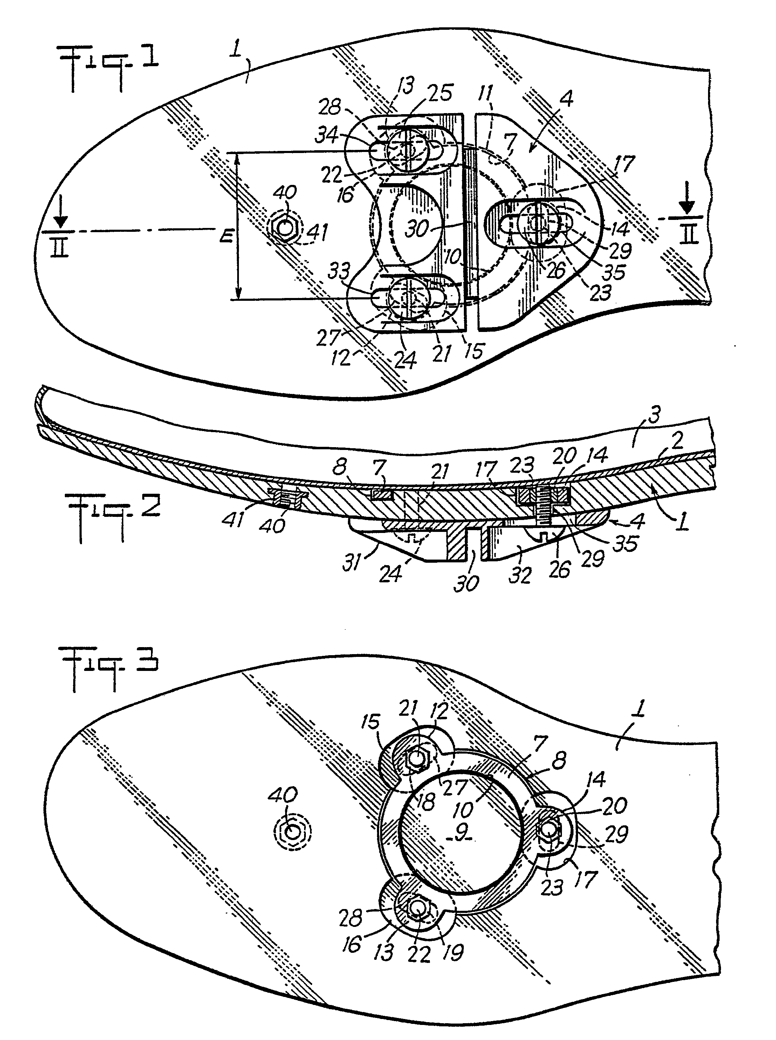

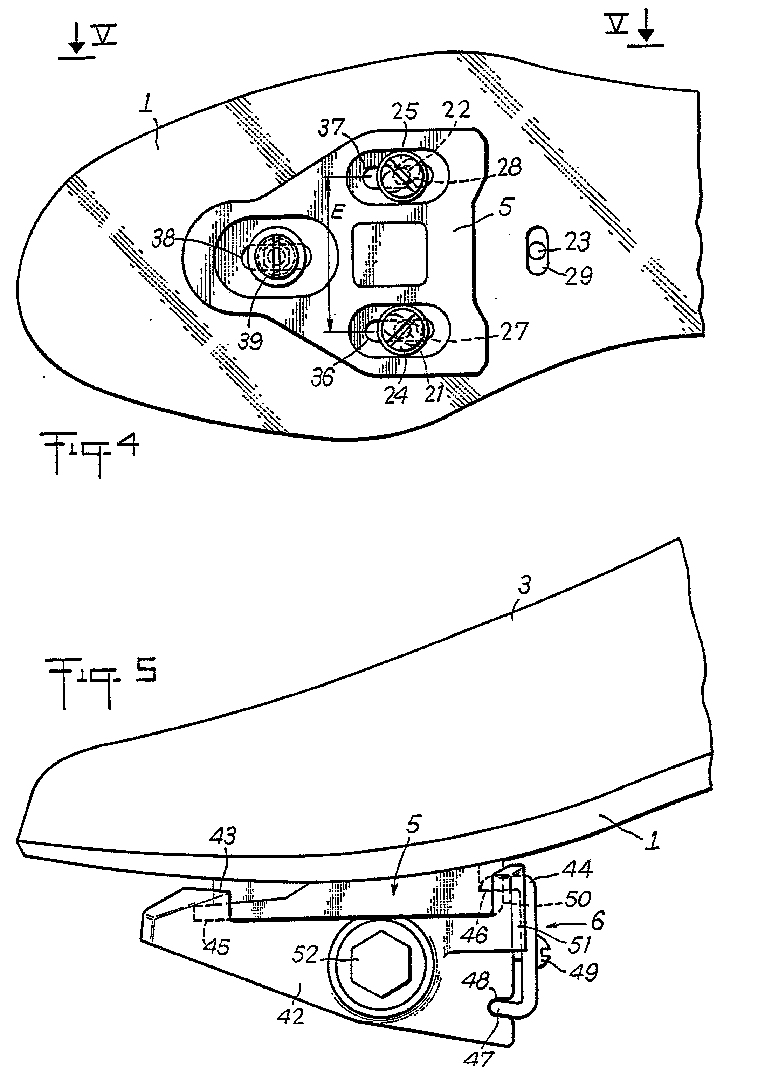

La chaussure de cyclisme, telle qu'elle est représentée partiellement sur les figures 2 et 5, comporte un semelage 1 en matière plastique moulée, sur laquelle est fixée, de préférence par collage, une première de montage 2 collée avec une tige 3.

La forme de réalisation du semelage illustrée par le dessin montre les moyens mis en œuvre grâce auxquels l'acheteur d'une paire de chaussures peut très facilement monter, sous ce semelage, avec l'aide seulement d'un tournevis, soit une plaquette cale-pédale 4 (figures 1 à 3), soit une pièce d'ancrage 5 (figures 4 et 5) pour un dispositif fixe-pédale de sécurité 6, ce montage s'accompagnant très aisément et rapidement d'un réglage de translation longitudinale et d'un réglage d'angulation sans que le semelage soit détérioré.

Ces moyens comportent une couronne 7 disposée dans un logement annulaire 8 et libre de pivoter autour d'un bossage 9 en étant guidée par la paroi centrale 10 ou la paroi périphérique 11 de ce logement. La couronne présente en saillie périphérique trois pattes 12 à 14 s'étendant dans des échancrures 15 à 17 du logement dont les extrémités constituent des butées pour ces pattes limitant l'amplitude angulaire de pivotement de ladite couronne. Les pattes 12 à 14 sont plus épaisses que la couronne 7 car elles enrobent, pour les maintenir prisonniers, des écrous 18 à 20 délimitant trois trous taraudés 21 à 23. Etant donné que ceux-ci sont destinés à coopérer avec des vis de serrage extérieures 24 à 26, les pattes 12 à 14 portent contre le fond des échancrures 15 à 17 plutôt que la couronne 7 contre le fond du logement 8.

Cette couronne 7 est prisonnière du semelage 1 mais parfaitement libre de pivoter sur elle-même suivant l'amplitude angulaire précitée, étant donné qu'elle est intercalée avec un jeu suffisant entre le fond du logement 8 de ce semelage et la première de montage 2, laquelle est collée sur le bossage 9 et le dessus dudit semelage à la périphérie. D'ailleurs, pour le passage des vis 24 à 26, des lumières 27 à 29 sont ménagées dans la couche d'usure du semelage 1 et s'étendent concentriquement à l'axe de pivotement de la couronne 7; dans l'exemple représenté, elles sont rectilignes et tangentes à la trajectoire circulaire de ladite couronne à cet endroit, elles peuvent aussi être arquées concentriquement à l'axe de pivotement.

S'il s'agit de monter la plaquette cale-pédale 4 (figure 1 à 3), celle-ci est en matière plastique moulée hautement résistante et allégée par des évidements. Elle délimite une rainure transversale 30 pour le centrage de l'une des barrettes méplates de la pédale; pour que cette rainure soit suffisamment profonde malgré les allégements, la plaquette 4 est à double pente et comporte des rampes inclinées antérieure 31 et postérieure 32. Elle délimite en outre, pour le passage des vis de fixation 24 à 26, des lumières longitudinales 33 à 35.

Ainsi, il est très facile de positionner la rainure 30, en déplaçant en translation longitudinale la plaquette 4 relativement aux vis 24 à 26 et en la faisant pivoter par entraînement au moyen de celles-ci de la couronne 7. Le positionnement étant réglé, le blocage par lesdites vis peut être effectué, ce qui a pour effet d'immobiliser la plaquette 4 et la couronne 7 relativement à la couche d'usure du semelage 1 et d'appliquer sur toute son étendue ladite plaquette contre la surface libre inférieure de ce semelage.

Dans la forme de réalisation représentée, les moyens décrits dans ce qui précède permettent également de fixer la pièce d'ancrage 5 du dispositif fixe-pédale de sécurité 6. Cette pièce 5 délimite en effet deux lumières longitudinales postérieures 36, 37 et une lumière longitudinale antérieure 38 pour le passage de trois vis.

Afin que les moyens de fixation de la plaquette cale-pédale 4 (figures 1 à 3) soient compatibles avec ceux que la pièce d'ancrage 5, les deux trous taraudés 21 et 22 de la couronne 7 sont disposés suivant une ligne transversale située à l'avant du troisième trou taraudé 23 et coïncidant avec la ligne transversale des lumières 36 et 37 de la pièce d'ancrage 5, l'écartement E de ces trous 21 et 22 étant en outre égal à celui desdites lumières 36 et 37. Dès lors, la pièce 5 peut être fixée à l'arrière par les vis 24 et 25 précitées avec possibilité d'un déplacement transversal par pivotement de la couronne 7. Cette pièce 5 est également fixée à l'avant par une vis 39 coopérant avec le trou taraudé 40 d'un insert 41 noyé dans le semelage 1.

Dans ces conditions, la pièce d'ancrage 5 peut être, avant blocage des vis de fixation 24, 25 et 39, réglée en position au choix de l'utilisateur par translation longitudinale et translation transversale arrière.

Cette pièce étant bloquée sous le semelage 1, la pièce à fixation rapide 42 du dispositif fixe-pédale de sécurité 6 peut venir s'y accrocher. A cet effet, et ainsi que cela ressort de la figure 5, cette pièce 42 comporte essentiellement un mors antérieur fixe 43 et un mors postérieur pivotant 44 coopérant avec des becs fixes 45 et 46 respectivement de ladite pièce. Le mors 44 présente en saillie un rebord 47 qui, en s'appuyant dans une gorge 48 de la pièce 42, constitue un axe de pivotement sensiblement horizontal; en outre, un ressort, non visible sur le dessin, tire sur le mors 44 pour l'enclencher dans le bec 46 et la tension de ce ressort est règlable au moyen d'une vis 49. Le mors fixe 43 et son bec 45 sont arqués, de même d'ailleurs que les parties débordantes latérales 50 du bec 46 et des ergots conjugués 51 de la pièce 42 de façon que la pièce d'ancrage 5 solidaire de la chaussure puisse être dégagée rapidement de la pièce de sécurité 42 par échappement latéral lors d'un pivotement autour d'un axe vertical, pivotement au cours duquel le mors mobile 44 s'efface contre l'action de son ressort de rappel; bien entendu, la pièce de sécurité 42 est tenue puisqu'elle est montée pivotante autour d'un axe 52 fixée en bout de la manivelle correspondante du pédalier. Pour remonter la chaussure sur cette sorte de pédale, il suffit d'emboîter le bec antérieur 45 dans le mors fixe 43 et d'appuyer pour que le mors mobile 44 s'efface d'abord et revienne ensuite prendre élastiquement le bec postérieur 46.

## Revendications

1. Chaussure de cyclisme susceptible de recevoir un dispositif cale-pédale, monté sous le semelage (1) et muni de moyens de règlage en position longitudinale et en position angulaire pour bien présenter une rainure transversale (30) de centrage relativement à l'une des barrettes méplates de la pédale, caractérisée en ce que dans le semelage (1) est noyé un élément de fixation (7) monté pivotant autour d'un axe central et présentant trois trous taraudés (21 à 23) pour des vis (24 à 26) traversant trois lumières longitudinales (33 à 35) d'une plaquette cale-pédale (4) à rainure (30) et trois lumières (27 à 29) concentriques à cet axe, ménagées dans la couche d'usure (1) contre laquelle sont appliqués cet élément de fixation (7) et cette plaquette cale-pédale (4).

2. Chaussure selon la revendication 1, caractérisée en ce que le semelage délimite un logement (8) dans lequel est disposée une couronne (7) montée tournante autour d'un bossage central (9) et intercalée avec jeu entre le fond de ce logement et une première de montage (2) collée sur le dessus du semelage, cette couronne présentant trois pattes saillantes (12 à 14) qui s'étendent dans des échancrures (15 à 17) du logement (8) pour limiter l'amplitude angulaire du pivotement de la couronne et qui délimitent les trois trous taraudés précités (21 à 23).

3. Chaussure selon la revendication 1 ou 2, caractérisée en ce que deux trous taraudés (21 et 22) et leurs lumières (27, 28) sont disposés en ligne transversale à l'avant, tandis que le troisième trou taraudé (23) et sa lumière (29) sont situés à l'arrière des précédents.

4. Chaussure selon la revendication 3, sous laquelle peut être monté indifféremment le dispositif cale-pédale précité (4) ou un dispositif fixe-pédale de sécurité (6) comprenant une pièce d'ancrage (5) susceptible d'être fixée sous le semelage au moyen de trois vis (24, 25, 39) traversant trois lumières longitudinales (36 à 38) de cette pièce dont deux (36, 37) sont disposées en ligne transversale à l'arrière, tandis que la troisième (38) est située à l'avant des précédentes, ladite pièce d'ancrage (5) coopérant avec une pièce à fixation rapide de sécurité (42) destinée à être montée sur une manivelle du pédalier, caractérisé, en ce que les deux trous taraudés antérieurs (21, 22) du dispositif cale-pédale (4) sont disposés sur la ligne transversale des lumières postérieures (36, 37) du dispositif fixe-pédale (6) et au même écartement que celles-ci afin de permettre la fixation avec règlage angulaire de la pièce d'ancrage (5), le semelage (1) comportant également un insert (41) taraudé (40) situé à l'avant en correspondance avec la lumière antérieure (38) de ladite pièce d'ancrage.

## Patentansprüche

1. Fahrradschuh zur Aufnahme einer Stegpedaleinrichtung, die auf der Unterseite der Sohlung (1) montiert und mit Mitteln zum Einstellen in der Längsposition und in der Winkelposition zwecks Schaffung einer Querrille (30) zum Zentrieren in bezug auf einen der Flachstege des Pedals versehen ist, dadurch gekennzeichnet, daß in der Sohlung (1) ein Befestigungselement (7) eingelassen ist, welches schwenkbar um eine zentrale Achse montiert ist und drei Gewindelöcher (21 bis 23) für Schrauben (24 bis 26) aufweist, die durch drei Langlöcher (33 bis 35) einer Stegpedalplatte (4) mit einer Rille (30) und drei zu dieser Achse konzentrische Ausnehmungen (27 bis 29) gehen, die in der Verschleißschicht (1) vorgesehen sind, auf welcher das Befestigungselement (7) und die Stegpedalplatte (4) angebracht sind.

2. Schuh nach Anspruch 1, dadurch gekennzeichnet, daß die Sohlung eine Aufnahme (8) begrenzt, in der ein Kranz (7) angeordnet ist, welcher drehbar um eine zentrale Erhebung (9) montiert und mit Spiel zwischen dem Grund dieser Aufnahme und einer auf der Oberseite der Sohlung aufgeklebten Montage-Brandsohle (2) eingesetzt ist, welcher Kranz drei vorspringende Pratzen (12 bis 14) aufweist, die sich zur Begrenzung des Winkelbereichs beim Schwenken des Kranzes in Aussparungen (15 bis 17) der Aufnahme (8) erstrecken und die drei genannten Gewindelöcher (21 bis 23) begrenzen.

3. Schuh nach Anspruch 1 oder 2, dadurch gekennzeichnet, daß zwei Gewindelöcher (21 und 22) und ihre Ausnehmungen (27, 28) in einer Querlinie vorne angeordnet sind, während das dritte Gewindeloch (23) und seine Ausnehmung (29) hinter den vorgenannten liegen.

4. Schuh nach Anspruch 3, auf dessen Unterseite ohne Unterschied die genannte Stegpedaleinrichtung (4) oder eine Sicherheitspedaleinrichtung (6) montierbar ist, umfassend ein Verankerungsstück (5) zur Befestigung an der Unterseite der Sohlung mittels dreier Schrauben (24, 25, 39), die durch drei Langlöcher (36 bis 38) dieses Stücks gehen, von denen zwei (36, 37) in einer Querlinie hinten angeordnet sind, wogegen sich das dritte (38) vor den vorgenannten befindet, welches Verankerungsstück (5) mit einem zur Montage auf einer Pedalkurbel bestimmten Schnell-Sicherheitsverschlußstück (42) zusammenwirkt, dadurch gekennzeichnet, daß die beiden vorderen Gewindelöcher (21, 22) der Stegpedaleinrichtung (4) an der Querlinie der hinteren Ausnehmungen (36, 37) der Sicherheitspedaleinrichtung (6) und im gleichen Abstand wie jene angeordnet sind, um die Befestigung des Verankerungsstücks (5) mit Winkelregulierung zu gestatten, wobei die Sohlung (1) auch einen Einsatz (41) mit Gewinde (40), der sich vorne in Übereinstimmung mit der vorderen Ausnehmung (38) des Verankerungsstücks befindet, umfaßt.

## Claims

1. Cycling shoe adapted to receive a pedal-stop device, mounted under the sole layer (1) and provided with means for adjusting the positioning longitudinally and angularly so as to accurately present a centering transversal groove (30) in relation to one of the flat bars of the pedal, characterized in that in the sole layer (1) is embedded a fastening element (7) mounted for pivoting about a central axis and presenting three tapped holes (21 to 23) for screws (24 to 26) traversing three longitudinal slots (33 to 35) of a pedal-stop plate (4) equipped with a groove (30) and three slots (27 to 29) concentric to said axis, provided in the wear layer (1) against which are applied said fastening element (7) and said pedal-stop plate (4).

2. Shoe according to claim 1, characterized in that the sole layer defines a housing (8) inside which is placed a ring (7) mounted for pivoting about a central boss (9) and inserted with play between the bottom of said housing and a mounting insole (2) bonded to the top of the sole layer, said ring having three projecting lugs (12 to 14) which extend into cut portions (15 to 17) of the housing (8) in order to limit the angular amplitude of the pivoting movement of the ring, and which define said three tapped holes (21 to 23).

3. Shoe according to claim 1 or 2, characterized in that two tapped holes (21 and 22) and their slots (27, 28) are disposed in transverse alignment at the front, whereas the third tapped hole (23) and its slot (29) are situated at the back of the others.

4. Shoe according to claim 3, under which can be mounted, indifferently, said pedal-stop device (4) or a pedal-stop safety device (6) comprising an anchoring piece (5) adapted to be fixed under the sole layer by means of three screws (24, 25, 39) traversing three longitudinal slots (36 to 38) of said piece, two of which slots (36, 37) are disposed in transversal alignment at the back, whereas the third (38) is situated at the front of the others, said anchoring piece (5) cooperating with an instant fastening safety piece (42) designed to be mounted on a pedal crank, characterized in that the two tapped holes at the front (21, 22) of the pedal-stop device (4) are disposed on the transversal line of the rear slots (36, 37) of the pedal-stop device (6) and at the same distance apart as said rear slots in order to allow the fastening with angular adjustment of the anchoring piece (5), the sole layer (1) further comprising an insert (41) which is tapped (40) and situated at the front correspondingly with the front slot (38) of said anchoring piece.

↓ V        V ↓

1

37    25    22
          28
38              5
E
39    24    21
36    27
23
29

Fig. 4

Fig. 5

3

43    5    1
44
50
45    46    6
51
52    49
48
42    47